# EUROPEAN PATENT APPLICATION

(11) **EP 4 836 263 A1**
(43) Date of publication of application: **04.11.2026**
(21) Application number: 26173956.9
(22) Date of filing: 22.04.2026
(51) Int. Cl.: H02M 1/00, H02M 3/00, H02M 3/335

(54) **CIRCUIT FOR THE DRIVING OF ISOLATED DC-DC RESONANT CONVERTERS WITH ZVS/ZCS SR DRIVING WITH ISOLATED VOLTAGE SENSING**

(30) Priority: 28.04.2025 US 202519191285
(71) Applicant: STMicroelectronics International N.V., 1228 Plan-les-Ouates, Geneva (CH)
(72) Inventor: MESSINA, Sebastiano, 95030 MASCALUCIA (CT) (IT); MASSIMIANI, Ivan Clemente, 95123 CATANIA (IT); TORRISI, Marco, 95030 GRAVINA DI CATANIA (CT) (IT)
(74) Representative: Cabinet Beaumont

(57) **Abstract**

An isolated CLLC DC-DC converter includes transistors arranged in full-bridge configurations on primary and secondary sides, with resonant components and a transformer providing isolation between sides. Driving circuitry monitors switching node voltages to determine zero voltage and zero current conditions for improving switching efficiency. The converter adapts its control strategy based on the relationship between switching frequency and resonant frequency. When switching frequency exceeds resonant frequency, synchronous rectification transistors are turned off based on time delay signals. When switching frequency is less than resonant frequency, synchronous rectification transistors are turned off based on comparator signals at zero current detection points. The converter operates bidirectionally, with a mode selection enabling the same hardware to function in both charge and discharge modes by swapping primary driving and synchronous rectification functions between sides. Threshold generation circuitry produces voltage references that determine precise switching timing for all operating conditions.

## Description

### TECHNICAL FIELD

This disclosure relates to DC-DC converter circuits, and in particular to isolated bidirectional CLLC resonant DC-DC converters with adaptive driving logic for optimizing conversion efficiency.

### BACKGROUND

Bidirectional isolated resonant DC-DC converters are widely used in electric vehicle chargers, energy storage systems, and renewable energy interfaces. Resonant DC-DC converters use tanks of reactive components that create resonant waveforms, providing soft switching where the power transistors turn on or off when either voltage or current is zero. This contrasts with hard switching, where the power transistors switch while experiencing both high voltage and current simultaneously, resulting in significant power losses as compared to soft switching. Hard switching can lead to power losses of 2-5% at each transition, representing over 30% of the total converter loss budget in many applications. LLC converters (using inductor-inductor-capacitor resonant tanks) for unidirectional power flow and CLLC converters (adding another capacitor to enable bidirectional operation) are isolated resonant DC-DC converter topologies that are in wide usage due to their high efficiency, with peak efficiencies exceeding 98% in optimized implementations.

These converters operate by precisely switching events to achieve Zero Voltage Switching (ZVS) during turn-on and Zero Current Switching (ZCS) during turn-off, reducing or eliminating switching losses. Primary sides typically use 50% duty cycle PWM signals with tuned dead-times, while secondary sides (rectification stages) use either diodes or semiconductor switches. Using switches such as transistors creates a Synchronous Rectification (SR) stage.

In bidirectional converters for battery chargers, the primary and SR stages interchange roles based on energy flow direction. This requires sensing circuitry in both stages to detect ZCS and ZVS conditions, increasing complexity and cost. Several sensing methods may be utilized for ZVS and ZCS detection, each with distinct isolation challenges. Voltage sensing typically relies on optocouplers or digital isolators for high-voltage isolation, which introduce propagation delays ranging from 100ns to 500ns and parasitic capacitances of 5pF to 20pF that distort the timing of switching signals. Current sensing achieves isolation more directly through current transformers, but these components add insertion losses of 0.1% to 0.3%, introduce phase shifts of 2 to 5 degrees due to transformer characteristics, and may suffer from DC offset issues that require compensation.

Additionally, the increasing complexity of power systems in data centers, aerospace, and industrial automation requires more sophisticated power conversion solutions. The demand for higher efficiency, reduced size, and improved reliability drives the need for new DC-DC converter designs. This rising demand has further complicated converter development by necessitating multi-stage architectures require numerous precisely timed PWM signals and fast control responses to adapt the switching frequency to changing input and output conditions. Existing commercial solutions lack isolation capabilities primarily because they were designed for single-stage converters with common ground references. Implementing isolation in these integrated circuits would increase chip complexity, cost, and size while potentially compromising the precise timing required for efficient operation. Consequently, system designers must add external isolation components, further complicating circuit design and introducing additional signal delays of 200ns to 500ns that can reduce efficiency by 0.5% to 1.5% in high-frequency applications.

Given that power requirements continue to increase, particularly in applications like vehicle-to-grid systems and renewable energy interfaces where bidirectional power flow at high efficiency is of particular concern, and multi-stage converters become more widely used, there is a need for further development.

### SUMMARY

An isolated DC-DC converter includes a primary side circuit with a first full-bridge arrangement of transistors, a secondary side circuit with a second full-bridge arrangement of transistors, a transformer coupling the primary side circuit to the secondary side circuit, and driving circuitry. The driving circuitry monitors switching node voltages on both the primary side circuit and the secondary side circuit; selectively operates in a charge mode in which the first full-bridge arrangement of transistors functions as primary driving transistors and the second full-bridge arrangement of transistors functions as synchronous rectification transistors, or in a discharge mode in which the second full-bridge arrangement of transistors functions as primary driving transistors and the first full-bridge arrangement of transistors functions as synchronous rectification transistors; detects zero current crossing points in resonant current waveforms; and adaptively controls turn-off timing of the transistors functioning as synchronous rectification transistors based on a relationship between a switching frequency and a resonant frequency of the converter, wherein the driving circuitry turns off the transistors functioning as synchronous rectification transistors based on time delay signals when the switching frequency exceeds the resonant frequency, and based on comparator signals at the zero current crossing points when the switching frequency is less than the resonant frequency.

The isolated DC-DC converter can be adapted for various applications, including but not limited to electric vehicles, renewable energy systems, data centers, aerospace, telecommunications, and industrial automation. The converter's design allows for integration with smart grid technologies, providing enhanced control and monitoring capabilities.

The driving circuitry may include a first voltage sensing circuit configured to monitor switching node voltages of the primary side circuit, and a second voltage sensing circuit configured to monitor switching node voltages of the secondary side circuit.

The first voltage sensing circuit may include a first pair of diodes coupled to switching nodes of the primary side circuit, and the second voltage sensing circuit may include a second pair of diodes coupled to switching nodes of the secondary side circuit.

The driving circuitry may further include a first comparator configured to compare a rectified voltage from the first voltage sensing circuit against a first threshold voltage, and a second comparator configured to compare a rectified voltage from the second voltage sensing circuit against a second threshold voltage.

The driving circuitry may further include a driving logic unit configured to generate a sawtooth waveform synchronized with the switching frequency, and compare the sawtooth waveform against multiple threshold voltages to generate timing signals for controlling the first full-bridge arrangement of transistors and the second full-bridge arrangement of transistors.

The isolated DC-DC converter may include threshold generation circuitry configured to generate multiple threshold voltages including turn-on threshold voltages that indicate suitable conditions for turning on transistors of the first and second full-bridge arrangements while achieving zero voltage switching, and turn-off threshold voltages that indicate suitable conditions for turning off transistors of the first and second full-bridge arrangements while achieving zero current switching.

The threshold generation circuitry may further generate blocking threshold voltages configured to prevent premature turn-off of transistors of the first and second full-bridge arrangements functioning as synchronous rectification transistors.

The driving circuitry may be configured to enable and disable synchronous rectification during light load conditions.

The primary side circuit may be coupled to a bus voltage source and the secondary side circuit may be coupled to a battery voltage source.

In the charge mode, power may flow from the primary side circuit to the secondary side circuit, and in the discharge mode, power may flow from the secondary side circuit to the primary side circuit.

The driving circuitry may include a mode selection input configured to select between the charge mode and the discharge mode, and switching circuitry configured to route appropriate drive signals to the first and second full-bridge arrangements of transistors based on the selected mode, wherein the drive signals implement the adaptive control of turn-off timing based on the relationship between the switching frequency and the resonant frequency, such that the switching circuitry routes either time delay signals or comparator signals for turn-off control of whichever full-bridge arrangement is functioning as synchronous rectification transistors in the selected mode, and wherein the comparator signals are also used to enable safe turn-on of the synchronous rectification transistors when indicating appropriate zero voltage switching conditions.

Driving circuitry for an isolated DC-DC converter having primary and secondary sides each with full-bridge transistor arrangements may include a first voltage sensing circuit, a second voltage sensing circuit, a first comparator, a second comparator, and a driving logic unit. The first voltage sensing circuit may include a first diode having its cathode coupled to a first switching node of the primary side, a second diode having its cathode coupled to a second switching node of the primary side, wherein anodes of the first and second diodes are connected to a first common node, a first resistor coupled between a supply voltage and the first common node, a first capacitor connected between the first common node and a first ground reference, and a first isolation transformer having its primary side connected between the first common node and the first ground reference. The second voltage sensing circuit may include a third diode having its cathode coupled to a first switching node of the secondary side, a fourth diode having its cathode coupled to a second switching node of the secondary side, wherein anodes of the third and fourth diodes are connected to a second common node, a second resistor coupled between the supply voltage and the second common node, a second capacitor connected between the second common node and a second ground reference, and a second isolation transformer having its primary side connected between the second common node and the second ground reference. The first comparator may have its non-inverting input coupled to a secondary side of the first isolation transformer, its inverting input connected to receive a first threshold voltage, and its output configured to provide a first comparator output signal. The second comparator may have its non-inverting input coupled to a secondary side of the second isolation transformer, its inverting input connected to receive a second threshold voltage, and its output configured to provide a second comparator output signal. The driving logic unit may be configured to generate gate drive signals for the full-bridge transistor arrangements based on the first and second comparator output signals.

The driving logic unit may include a clock signal input, a voltage-controlled oscillator coupled to the clock signal input through an optional digital-to-analog converter, a sawtooth generator coupled to an output of the VCO, a first comparator having its non-inverting input coupled to receive a sawtooth waveform from the sawtooth generator and its inverting input coupled to receive a first turn-on threshold voltage, a second comparator having its non-inverting input coupled to receive the sawtooth waveform and its inverting input coupled to receive a first turn-off threshold voltage, a third comparator having its non-inverting input coupled to receive the sawtooth waveform and its inverting input coupled to receive a second turn-on threshold voltage, and a fourth comparator having its non-inverting input coupled to receive the sawtooth waveform and its inverting input coupled to receive a second turn-off threshold voltage.

The driving logic unit may further include a first SR flip-flop having a set input coupled to an output of the first comparator, a reset input coupled to the clock signal input, and an output configured to provide a first primary driving signal, a second SR flip-flop having a set input coupled to an output of the third comparator, a reset input coupled to an output of the second comparator, and an output configured to provide a second primary driving signal, a first switch having a first input coupled to receive the first comparator output signal from the first comparator, a second input coupled to receive the second comparator output signal, and a control input coupled to receive a mode selection signal, a second switch having a first input coupled to receive the second comparator output signal from the second comparator, a second input coupled to receive the first comparator output signal, and a control input coupled to receive the mode selection signal, a first inverter having an input coupled to an output of the first switch, a fifth comparator having its non-inverting input coupled to receive the sawtooth waveform and its inverting input coupled to receive a first synchronous rectification turn-on threshold voltage, a first AND gate having a first input coupled to an output of the fifth comparator and a second input coupled to an output of the first inverter, a third SR flip-flop having a set input coupled to an output of the first AND gate, a sixth comparator having its non-inverting input coupled to receive the sawtooth waveform and its inverting input coupled to receive a first synchronous rectification turn-off threshold voltage, a first OR gate having a first input coupled to an output of the sixth comparator and a second input coupled to the output of the first switch and to the output of the second switch, a seventh comparator having its non-inverting input coupled to receive the sawtooth waveform and its inverting input coupled to receive a first blocking threshold voltage, a second AND gate having a first input coupled to an output of the first OR gate and a second input coupled to an output of the seventh comparator, the third SR flip-flop having a reset input coupled to an output of the second AND gate and an output configured to provide a first synchronous rectification driving signal, a second inverter having an input coupled to an output of the second switch and to the output of the first switch, an eighth comparator having its non-inverting input coupled to receive the sawtooth waveform and its inverting input coupled to receive a second synchronous rectification turn-on threshold voltage, a third AND gate having a first input coupled to an output of the eighth comparator and a second input coupled to an output of the second inverter, a fourth SR flip-flop having a set input coupled to an output of the third AND gate, a ninth comparator having its non-inverting input coupled to receive the sawtooth waveform and its inverting input coupled to receive a second synchronous rectification turn-off threshold voltage, a second OR gate having a first input coupled to an output of the ninth comparator and a second input coupled to the output of the second switch and to the output of the first switch, a tenth comparator having its non-inverting input coupled to receive the sawtooth waveform and its inverting input coupled to receive a second blocking threshold voltage, a fourth AND gate having a first input coupled to an output of the second OR gate and a second input coupled to an output of the tenth comparator, the fourth SR flip-flop having a reset input coupled to an output of the fourth AND gate and an output configured to provide a second synchronous rectification driving signal.

The driving circuitry may further include a first fifth AND gate having a first input coupled to the output of the third SR flip-flop, a second input coupled to receive a synchronous enable signal, and an output configured to provide the first synchronous rectification driving signal, and a second sixth AND gate having a first input coupled to the output of the fourth SR flip-flop, a second input coupled to receive the synchronous enable signal, and an output configured to provide the second synchronous rectification driving signal.

The driving circuitry may further include output switching circuitry having a first set of switches configured to selectively route, based on the mode selection signal, either the first primary driving signal and the second primary driving signal or the first synchronous rectification driving signal and the second synchronous rectification driving signal to drive inputs of the full-bridge transistor arrangement on the primary side, and a second set of switches configured to selectively route, based on the mode selection signal, either the first synchronous rectification driving signal and the second synchronous rectification driving signal or the first primary driving signal and the second primary driving signal to drive inputs of the full-bridge transistor arrangement on the secondary side.

The driving logic unit may include a delay generator configured to receive a signal proportional to the clock signal and generate multiple delay signals, the delay signals including a first primary turn-on delay signal, a second primary turn-on delay signal, a second primary turn-off delay signal, a first synchronous rectification turn-on delay signal, a first synchronous rectification turn-off delay signal, a first blocking delay signal, a second synchronous rectification turn-on delay signal, a second synchronous rectification turn-off delay signal, and a second blocking delay signal.

The driving circuitry may further include a first SR flip-flop having a set input coupled to receive the first primary turn-on delay signal, a reset input coupled to receive the clock signal, and an output configured to provide a first primary driving signal, a second SR flip-flop having a set input coupled to receive the second primary turn-on delay signal, a reset input coupled to receive the second primary turn-off delay signal, and an output configured to provide a second primary driving signal, a first inverter having an input coupled to the first or second comparator output signal of the first or second sensing circuit via switching circuitry, a first AND gate having inputs coupled to receive an output of the first inverter and the first synchronous rectification turn-on delay signal, a first OR gate having inputs coupled to receive the first synchronous rectification turn-off delay signal and the first or second comparator output signal of the first or second sensing circuit via switching circuitry, a second AND gate having inputs coupled to receive an output of the first OR gate and the first blocking delay signal, a third SR flip-flop having a set input coupled to an output of the first AND gate, a reset input coupled to an output of the second AND gate, and an output providing a first synchronous rectification signal, a second inverter having an input coupled to the first or second comparator output signal of the first or second sensing circuit via switching circuitry, a third AND gate having inputs coupled to receive an output of the second inverter and the second synchronous rectification turn-on delay signal, a second OR gate having inputs coupled to receive the second synchronous rectification turn-off delay signal and the first or second comparator output signal of the first or second sensing circuit via switching circuitry, a fourth AND gate having inputs coupled to receive an output of the second OR gate and the second blocking delay signal, and a fourth SR flip-flop having a set input coupled to an output of the third AND gate, a reset input coupled to an output of the fourth AND gate, and an output providing a second synchronous rectification signal.

The first ground reference may be connected to a control system ground associated with the driving logic unit, and the second ground reference may be electrically isolated from the first ground reference by the first and second isolation transformers.

The first ground reference may be connected to a control system ground associated with the primary side of the isolated DC-DC converter, and the second ground reference may be electrically isolated form the first ground reference by at least one of the first and second isolation transformers and by the main isolation transformer of the DC-DC converter, wherein the connection configuration of the ground references of the isolation transformers to the isolation transformers is adaptable based on the desired ground arrangement connected to the secondary side of the isolated DC-DC converter and to a control system ground associated with the driving logic unit.

### BRIEF DESCRIPTION OF THE DRAWINGS

FIG. 1 is a schematic diagram of an isolated CLLC DC-DC converter according to an embodiment.
FIG. 2 is a schematic diagram of a driving circuitry for controlling the converter of FIG. 1.
FIGS. 3A-3F are graphs showing converter operation when switching frequency is greater than resonant frequency.
FIGS. 4A-4F are graphs showing converter operation when switching frequency is less than resonant frequency.
FIG. 5 is a schematic diagram of an alternative embodiment of the isolated CLLC DC-DC converter with reversed ground connections.
FIG. 6 is a schematic diagram of the driving circuitry for controlling the converter of FIG. 5.
FIG. 7 is a schematic diagram of threshold generation circuitry for generating the various threshold voltages used by the driving logic.
FIG. 8A-8B are schematic diagrams of a first embodiment of the driving logic unit.
FIG. 9 is a schematic diagram of a second embodiment of the driving logic unit.

### DETAILED DESCRIPTION

The following disclosure enables a person skilled in the art to make and use the subject matter described herein. The general principles outlined in this disclosure can be applied to embodiments and applications other than those detailed above without departing from the spirit and scope of this disclosure. It is not intended to limit this disclosure to the embodiments shown, but to accord it the widest scope consistent with the principles and features disclosed or suggested herein.

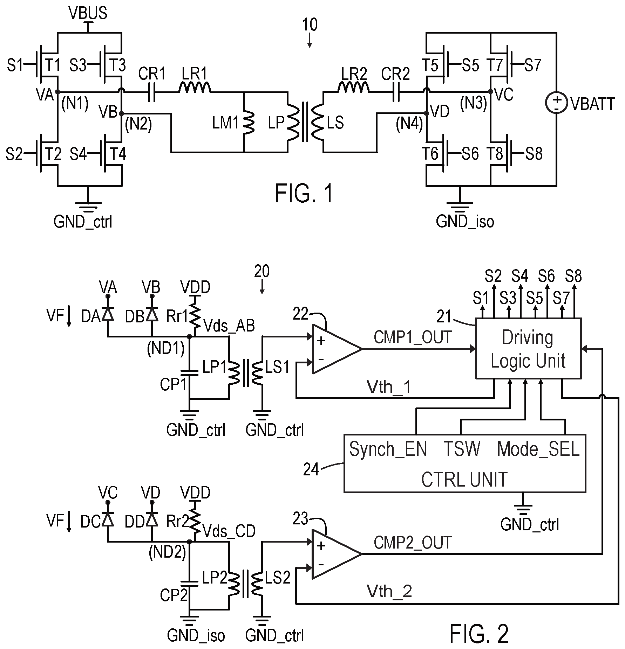

An isolated CLLC DC-DC converter 10 is now described with reference to FIG. 1.

On the primary side: n-channel transistor T1 has its drain connected to VBUS, its source connected to node N1, and its gate coupled to receive gate drive signal S1; n-channel transistor T2 has its drain connected to node N1, its source connected to GND_ctrl, and its gate coupled to receive gate drive signal S2; n-channel transistor T3 has its drain connected to VBUS, its source connected to node N2, and its gate couped to receive gate drive signal S3; and n-channel transistor T4 has its drain connected to node N2, its source connected to GND_ctrl, and its gate coupled to receive gate drive signal S4. Resonant capacitor CR1 representing the primary side resonant capacitance and resonant inductor LR1 representing the primary side resonant inductance are connected in series between node N1 and a first terminal of primary side transformer LP, with the second terminal of primary side transformer being connected to node N2. Magnetizing inductance LM1 representing the transformer's primary magnetizing inductance is connected in parallel with primary side transformer LP.

On the secondary side: n-channel transistor T5 has its drain connected to the battery voltage VBATT (a battery voltage source with its positive terminal connected to the drains of T5 and T7, and its negative terminal connected to GND_iso), its source connected to node N4, and its gate coupled to receive gate drive signal S5; n-channel transistor T6 has its drain connected to node N4, its source connected to GND_iso, and its gate coupled to receive gate drive signal S6; n-channel transistor T7 has its drain connected to node the battery voltage VBATT, its source connected to N3, and its gate coupled to receive gate drive signal S7; and n-channel transistor T8 has its drain connected to node N3, its source connected to GND_iso, and its gate coupled to receive gate drive signal S8. Resonant inductor LR2 representing the secondary side resonant inductance and resonant capacitor CR2 representing the secondary side resonant capacitance are connected in series between a first terminal of secondary side transformer LS and node N3, with the second terminal of secondary side transformer being connected to node N4.

The driving circuitry 20 for controlling the converter 10 is now described with reference to FIG. 2. The driving circuitry 20 includes: diode DA having its cathode coupled to receive voltage VA from node N1 and its anode connected to node Nd1; diode DB having it cathode coupled to receive voltage VB from node N2 and its anode connected to node ND1; resistor Rr1 coupled between VDD and node ND1; capacitor CP1 connected between node ND1 and GND _ctrl; and the primary side LP1 of a transformer connected between node ND1 and GND_CTRL. The driving circuitry 20 further includes: the secondary side LS1 of a transformer connected between non-inverting input of comparator 22 and GND_ctrl, the inverting input of comparator 22 connected to receive voltage Vth_1 from driving logic unit 21, and the output of comparator 22 connected to provide CMP1_OUT to an input of driving logic unit 21.

The driving circuitry 20 further includes: diode DC having its cathode coupled to receive voltage VC from node N3 and its anode connected to node ND2; diode DD having its cathode coupled to receive voltage VD from node N4 and its anode connected to node ND2; resistor Rr2 coupled between VDD and node ND2; capacitor CP2 connected between node ND2 and GND_iso; and the primary side LP2 of a transformer connected between node ND2 and GND_iso. Each diode DA, DB, DC, and DD may be a single diode or multiple diodes connected in series.

The driving circuitry 20 further includes: the secondary side LS2 of a transformer connected between the non-inverting input of comparator 23 and GND_ctrl, the inverting input of comparator 23 connected to receive voltage Vth_2 from driving logic unit 21, and the output of comparator 23 connected to provide CMP2_OUT to an input of driving logic unit 21.

The driving circuitry 20 utilizes various threshold voltage signals to determine switching times for the transistors. The comparator threshold voltages Vth_1 and Vth_2 are reference voltages provided by the driving logic unit 21 to comparators 22 and 23, respectively. These threshold voltages are set to approximately 0.7V, equivalent to the forward voltage VF of diodes DA, DB, DC, and DD of FIG. 2, to detect the ZCD points in the resonant current waveforms. These threshold voltages VF may be changed according to application and hardware specifics. Note also that in the case where the diodes DA, DB, DC, and DD are multiple diodes in series, the threshold voltage VF would be multiplied by the number of diodes in the series.

The gate drive threshold voltages include turn-on thresholds Vth_ON_1,4, Vth_ON_2,3, Vth_ON_5,8, Vth_ON_6,7 that, when crossed, indicate suitable conditions for turning ON the corresponding transistor pairs T1/T4, T2/T3, T5/T8, T6/T7 while achieving ZVS. The turn-off thresholds Vth_OFF_1,4, Vth_OFF_2,3, Vth_OFF_5,8, Vth_OFF_6,7 indicate suitable conditions for turning OFF the corresponding transistor pairs while achieving ZCS. Additionally, blocking threshold voltages Vth_OFF_BLK_5,8, Vth_OFF_BLK_6,7 prevent premature turn-off of transistors during certain operating conditions, particularly when the switching frequency differs from the resonant frequency.

A control unit 24 provides signals Synch_EN, TSW, and Mode_SEL to driving logic unit 21. The Synch_EN signal is a logic enable signal for synchronous driving that is may be disabled for light load conditions to improve efficiency. The TSW signal represents the switching period value that can be provided digitally (e.g., from a microcontroller) or as an analog signal (e.g., from an integrated circuit). The Mode_SEL signal is a logic selector for determining whether the converter operates in charge mode or discharge mode, effectively controlling the swapping of primary and SR driving functions between the two sides of the converter. Driving logic unit 21 generates gate drive signals S1-S8 based on these control signals and the comparator outputs.

The operation of the isolated CLLC DC-DC converter 10 and its driving circuitry 20 is now described with reference to FIGS. 1, 2, and 3. The converter 10 operates in two distinct modes: charge mode and discharge mode, as shown in FIG. 2. In charge mode, transistors T1-T4 on the primary side operate as the primary driving stage with 50% duty cycle, while transistors T5-T8 on the secondary side function as the synchronous rectification (SR) stage. Conversely, in discharge mode, the roles reverse, with T5-T8 functioning as the primary driving stage and T1-T4 as the SR stage.

The driving logic for these two stages differs. The primary driving signals are based on time delays, with complementary transistor pairs T1/T2, T3/T4, T5/T6, T7/T8 operating with dead-time to prevent shoot-through. The SR driving, however, relies on both time delays and comparator triggers CMP1_OUT or CMP2_OUT to achieve ZVS and ZCS.

For SR driving, the turn-on condition occurs when both a predetermined delay time Tdelay_ON has elapsed AND the respective comparator output is LOW, indicating a zero voltage condition suitable for turn-on. The turn-off condition occurs when either a predetermined delay time Tdelay_OFF has elapsed OR the comparator output experiences a RISING_EDGE, indicating a zero current condition suitable for turn-off.

The driving circuitry 20 implements a voltage sensing method to detect these switching conditions. On the primary side, diodes DA and DB rectify the switching node voltages VA and VB, creating a voltage signal Vds_AB at node ND1. Similarly, on the secondary side, diodes DC and DD rectify voltages VC and VD to create voltage signal Vds_CD at node ND2. These voltage signals are isolated through transformers LP1/LS1 and LP2/LS2, and compared against threshold voltages Vth_1 and Vth_2 by comparators 22 and 23.

The isolated CLLC DC-DC converter 10 adapts its control strategy based on the relationship between switching frequency (fsw) and resonant frequency (fres) to maintain optimal switching conditions. Both turn-off mechanisms are always enabled, and the one that "wins" depends naturally on the switching frequency relationship, which is determined by the operation of the resonant converter. When fsw exceeds fres, the secondary resonance current Ires2 does not reach zero within its half-switching period, necessitating turn-off of the synchronous rectification (SR) transistors T5-T8 based on predetermined time delay signals Tdelay_OFF _6,7, and Tdelay_OFF _5,8. Conversely, when fsw is less than fres, the secondary resonance current Ires2 drops to zero within its half-switching period, enabling the system to turn off SR transistors T5-T8 in response to the comparator output signal CMP2_OUT at Zero Current Detection (ZCD) points. This adaptive control mechanism provides for ZCS when possible, reducing switching losses and improving efficiency across varying operating conditions. The dual-mode operation allows the converter 10 to maintain robust performance regardless of input/output voltage conditions, load variations, or selected operating frequency as determined by TSW signal from control unit 24.

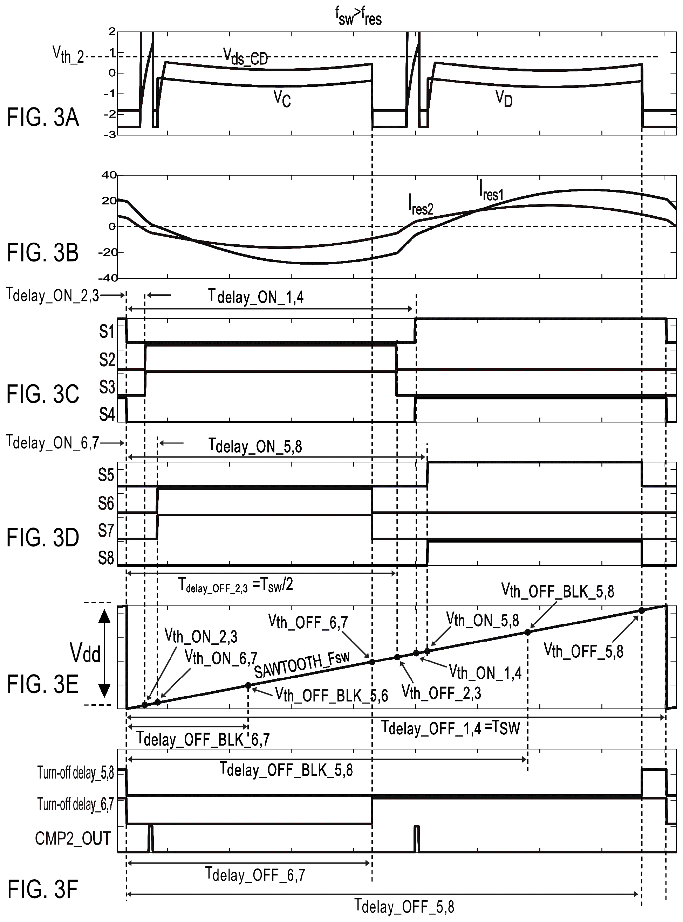

In greater detail, FIGS. 3A-3F illustrate the operation of the converter when the switching frequency fsw is greater than the resonant frequency fres. FIG. 3A shows the voltages VC, VD, Vds_CD, and Vth_2. FIG. 3B displays the resonant currents Ires1 and Ires2. FIGS. 3C-3F show the gate drive signals S1-S8, the various timing delays, threshold voltages, and the comparator output CMP2_OUT.

The driving logic for the primary and secondary sides differs fundamentally. For the primary side (T1-T4 or T5-T8, depending on mode), both turn-on and turn-off operations are based solely on time delays. For the secondary side (T5-T8 or T1-T4, depending on mode), the logic is more complex: turn-on occurs when both the delay time has elapsed AND CMP2_OUT is LOW, while turn-off occurs when either the delay time has elapsed OR the comparator 23 detects a rising edge. This OR logic for turn-off provides for suitable switching under varying operating conditions. The threshold voltage Vth_2 is set equal to VF (the forward voltage of diodes), which should be approximately 0.7V or higher to provide a robust turn-off trigger for zero current switching (ZCS).

Looking at the timing relationships in FIGS. 3A-3F, several delays are implemented to provide for proper switching sequences. Tdelay_ON_2,3 represents the delay between transistors T1, T4 turning off (beginning of the switching period Tsw) and transistors T2, T3 turning on. Similarly, Tdelay_ON_1,4 represents the delay between T1, T4 turning off and T1, T4 turning on. On the secondary side, Tdelay_ON_6,7 represents the delay between primary side transistors T1, T4 turning off and secondary side transistors T6, T7 turning on. Likewise, Tdelay_ON_5,8 represents the delay between primary side transistors T1, T4 turning OFF and secondary side transistors T5, T8 turning on. All these turn-on delays are timed to provide for ZVS turn-on conditions.

These inter-switching delays provide for proper operation. For example, the delay between turning OFF primary side transistors T1, T4 and turning on secondary side transistors T6, T7 (Tdelay_ON_6,7) in particular where Tdelay_ON_6,7 has a higher value than Tdelay_ON_2,3 allows the body diodes of T6, T7 to begin conducting, creating conditions for zero voltage switching (ZVS) when the MOSFETs are finally turned on.

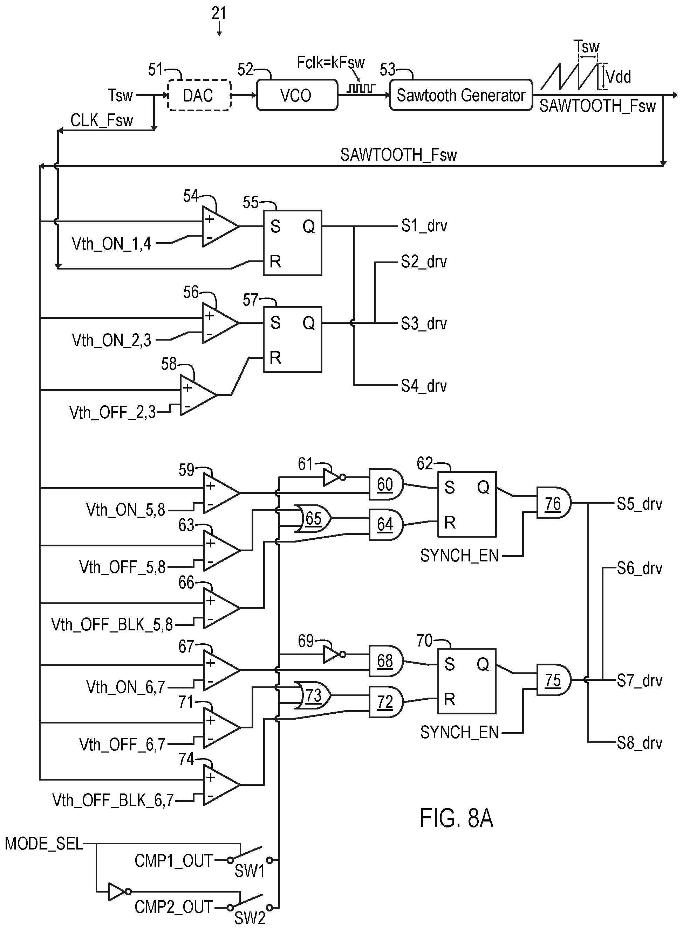

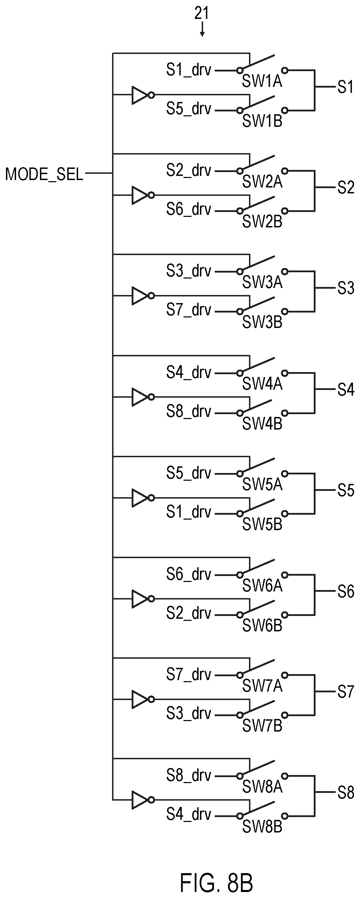

In this operating condition (fsw>fres), the secondary resonance current does not reach zero within its half-switching period. Therefore, the safe turn-off trigger for the SR transistors is provided by the turn-off time delay signals Tdelay_OFF_6,7 and Tdelay _OFF_5,8 for secondary side SR. For the case of reverse/discharge mode the proper converter control behavior is obtained by swapping the roles and corresponding driving signals of the switches and comparators: T1 with T5, T2 with T6, etc., and CMP2 with CMP1 and VC,VD with VA,VB etc., as shown in FIGS 8A and 8B. As shown, the turn-off delay signals are timed to provide for a proper switching sequence, with Tdelay_OFF_2,3 equal to half the switching period Tsw/2 and Tdelay_OFF_1,4 equal to the full switching period Tsw. Additionally, blocking delays Tdelay_OFF_BLK_6,7 and Tdelay_OFF_BLK_5,8 prevent premature turn-off of the secondary side transistors under certain operating conditions.

The secondary side MOSFETs T5-T8 are to turn off before their corresponding primary side counterparts T1-T4 change state to prevent reverse current flow. This sequencing is maintained through the careful coordination of these delay signals. The same coordination is adopted between T6, T7 and their counterparts T2, T3

The threshold voltage Vth_2, set equal to VF (the forward voltage of diodes) which equals Vds_CD when at the zero crossing detection (ZCD) point, is set to approximately 0.7V to provide a turn-off trigger for ZCS preventing the also the reverse flow of the secondary resonant current within the same half switching cycle.

The driving logic unit 21 processes these signals to generate the appropriate gate drive signals S1-S8, adapting to changing input/output conditions and operating modes. The Mode_SEL signal from control unit 24 determines whether the converter operates in charge mode (bus to battery) or discharge mode (battery to bus), effectively swapping the roles of primary and SR driving between the two sides of the converter. The TSW signal sets the basic switching frequency, while the Synch_EN signal enables or disables synchronous rectification, typically disabling it during light load conditions to improve efficiency.

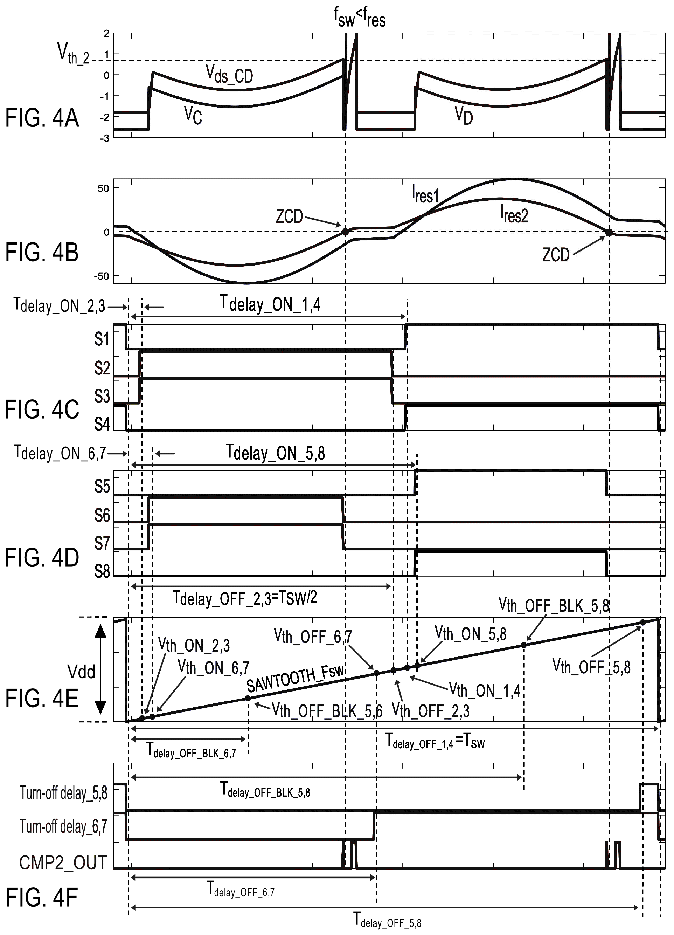

FIGS. 4A-4F illustrates the operation of the converter when the switching frequency fsw is less than the resonant frequency fres. FIG. 4A shows the voltages VC, VD, Vds_CD, and Vth_2. FIG. 4B shows the resonant currents Ires1 and Ires2, with zero current detection (ZCD) points clearly marked. FIGS. 4C-4F shows the gate drive signals S1-S8, the various timing delays, threshold voltages, and the comparator output CMP2_OUT.

In this operating condition (fsw<fres), the secondary resonance current drops to zero within its half-switching period, as indicated by the ZCD points. While the driving logic remains the same as described for FIGA. 3A-3F, the behavior differs. For secondary driving, the turn-on condition still follows the logical AND operation of the time delay having elapsed and CMP2_OUT being low, but the turn-off operation following the logical OR condition of the time delay either being elapsed or the comparator 23 detecting a rising edge. This is because the CMP2_OUT signal experiences a rising edge at the ZCD points before the time delay signals are triggered. Therefore, the safe turn-off trigger for the SR transistors is provided by the comparator signal CMP2_OUT rather than the time delay signals. The comparator output experiences a rising edge at the ZCD points, providing an optimal turn-off trigger for ZCS. As shown in FIGS. 4A-4F, the turn-off delay signals Tdelay_OFF_6,7 and Tdelay_OFF _5,8 for secondary side SR are still present, but the actual turn-off is triggered by the CMP2_OUT signal. The turn-on delays Tdelay_ON_2,3, Tdelay_ON_1,4, Tdelay_ON_6,7, and Tdelay_ON_5,8 are timed to provide for ZVS turn-on conditions, similar to the fsw>fres case.

The threshold voltage Vth_2, set equal to VF (approximately 0.7V), provides a robust turn-off trigger at the ZCD points, providing for proper ZCS operation. This shows how the driving logic adapts to the relationship between switching frequency and resonant frequency to maintain proper operation throughout various operating conditions.

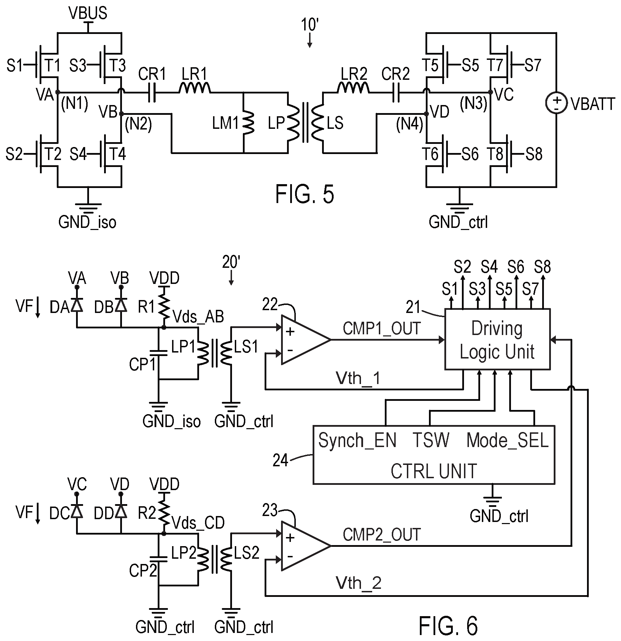

FIGS. 5-6 illustrate an alternative embodiment of the isolated CLLC DC-DC converter 10' and its driving circuitry 20', respectively. The distinction between this embodiment and the one shown in FIGS. 1-2 is the reversal of the ground connections. In FIGS. 5-6, GND_iso is connected to the primary side (bus side) of the converter 10', while GND_ctrl is connected to the secondary side (battery side). This contrasts with FIGS. 1-2, where GND_ctrl is on the bus side and GND_iso is on the battery side. This ground arrangement has implications for system integration. GND_ctrl represents the control system ground, which is connected to the driving logic unit 21 and control unit 24 that generate the gate drive signals and control functions. GND_iso represents an isolated ground reference that is electrically separated from GND_ctrl by the isolation barrier formed by the transformers. The configuration in FIGS. 1-2 may be preferable in systems where it is desired for the driving circuitry to share a ground with the bus, while the configuration in FIGS. 5-6 may be advantageous in applications where isolating the driving circuitry from the bus is desired.

It should be noted that the ground connection configuration of the sensing circuits provides additional flexibility in system design. In the configuration of FIGS. 1-2, the ground pins of the first sensing transformer (LP1) are connected together to GND_ctrl, effectively "shorting" it and negating its isolation function, while the ground pins of the second sensing transformer (LP2) are used to separate GND_iso from GND_ctrl. Conversely, in the configuration of FIGS. 5-6, the ground pins of the second sensing transformer (LP2) are "shorted," while the ground pins of the first transformer (LP1) are used to separate GND_iso from GND_ctrl. This adaptable approach allows the sensing circuit to be integrated with external pins for ground connection that can be configured according to the desired ground arrangement, providing flexibility to accommodate various system integration requirements without redesigning the sensing circuitry.

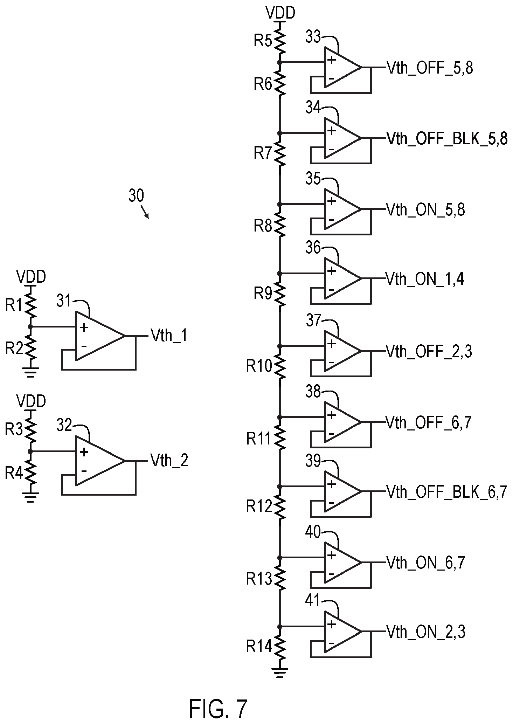

Threshold generation circuitry 30 (either incorporated in driving logic unit 21 or a separate circuit connected to driving logic unit 21) for generating Vth_1, Vth_2, Vth_OFF_5,8, Vth_OFF_BLK_5,8, Vth_ON_5,8, Vth_ON_1,4, Vth_OFF_2,3, Vth_OFF_6,7, Vth_OFF_BLK_6,7, Vth_ON_6,7, and Vth_ON_2,3 is now described with reference to FIG. 7. Threshold generation circuitry 30 includes: amplifier 31 having its non-inverting input connected to the tap between resistors R1 and R2 connected in series between VDD and ground, with Vth_1 being produced at the output of amplifier 31; and amplifier 32 having its non-inverting input connected to the tap between resistors R3 and R4 connected in series between VDD and ground, with Vth_2 being produced at the output of amplifier 32. Also included are resistors R5-R14 connected in series between VDD and ground. Amplifier 33 has its non-inverting input connected to the tap between resistors R5 and R6, and produces Vth_OFF_5,8 at its output. Amplifier 34 has its non-inverting input connected to the tap between resistors R6 and R7, and produces Vth_OFF_BLK_5,8 at its output. Amplifier 35 has its non-inverting input connected to the tap between resistors R7 and R8, and produces Vth_ON_5,8 at its output. Amplifier 36 has its non-inverting input connected to the tap between resistors R8 and R9, and produces Vth_ON_1,4 at its output. Amplifier 37 has its non-inverting input connected to the tap between resistors R9 and R10, and produces Vth_OFF_2,3 at its output. Amplifier 38 has its non-inverting input connected to the tap between resistors R10 and R11, and produces Vth_OFF_6,7 at its output. Amplifier 39 has its non-inverting input connected to the tap between resistors R11 and R12, and produces Vth_OFF_BLK_6,7 at its output. Amplifier 40 has its non-inverting input connected to the tap between resistors R12 and R13, and produces Vth_ON_6,7 at its output. Amplifier 41 has its non-inverting input connected to the tap between resistors R13 and R14, and produces Vth_ON_2,3 at its output.

The specifics of a first embodiment of the driving logic unit 21 is now described with reference to FIGS. 8A-8B. As shown, the driving logic unit 21 includes a DAC 51 receiving CLK_Fsw as input. Output of the DAC 51 is fed to VCO 52, and the output of VCO 52 is Fclk (proportional to the switching frequency fsw), which is passed to sawtooth generator 53 to generate SAWTOOTH_Fsw. The SAWTOOTH_Fsw waveform ranges from 0V to VDD, providing a full-scale reference against which the various threshold voltages are compared, as illustrated in FIGS. 3-4.

Note that as an alternative, DAC 51 may not be present, and VCO 52 may receive an appropriate analog input signal used for setting Tsw.

Comparator 54 has a non-inverting input connected to receive SAWTOOTH_Fsw, its inverting input connected to receive Vth_ON_1,4, and provides its output to the set input of SR flip-flop 55. SAWTOOTH_Fsw is provided to the reset input of SR flip-flop 55, and the output of SR flip-flop 55 provides S1_drv and S4_drv. Comparator 56 has a non-inverting input connected to receive SAWTOOTH_Fsw, its inverting input connected to receive Vth_ON_2,3, and provides its output to the set input of SR flip-flop 57. Comparator 58 has a non-inverting input connected to receive SAWTOOTH_Fsw, its inverting input connected to receive Vth_OFF_2,3, and provides its output to the reset input of SR flip-flop 57. The output of SR flip-flop 57 provides S3_drv and S2_drv.

Switch SW1 selectively provides CMP1_OUT to the inputs of NOT gates 61 and 69, as well as to inputs of OR gates 65 and 73. Switch SW2 selectively provides CMP2_OUT to the inputs of NOT gates 61 and 69, as well as to inputs of OR gates 65 and 73. Switches SW1 and SW2 are operated opposite in phase to one another by the mode select signal MODE_SEL.

Comparator 59 has its non-inverting input connected to receive SAWTOOTH_Fsw and its inverting input connected to receive Vth_ON_5,8. AND gate 60 has its inputs connected to the output of comparator 59 as well as to the output of inverter 61. The output of AND gate 60 is connected to the set input of SR flip-flop 62.

Comparator 63 has its non-inverting input connected to receive SAWTOOTH_Fsw and its inverting input connected to receive Vth_OFF_5,8. OR gate 65 has its inputs connected to the output of comparator 63 as well as to switches SW1 and SW2.

Comparator 66 has its non-inverting input connected to receive SAWTOOTH _Fsw and its inverting input connected to receive Vth_OFF_BLK_5,8. The output of comparator 66 is connected to one input of AND gate 64, and the output of OR gate 65 is connected to the other input of AND gate 64. The output of AND gate 64 is connected to the reset input of SR flip-flop 62.

Comparator 67 has its non-inverting input connected to receive SAWTOOTH_Fsw and its inverting input connected to receive Vth_ON_6,7. The output of comparator 67 is connected to one input of AND gate 68, and the other input of AND gate 68 is connected to the output of inverter 69.

Comparator 71 has its non-inverting input connected to receive SAWTOOTH _Fsw and its inverting input connected to receive Vth_OFF_6,7. The output of comparator 71 is connected to one input of OR gate 73, with the other input of OR gate 73 being connected to switches SW1 and SW2.

Comparator 74 has its non-inverting input connected to receive SAWTOOTH _Fsw and its inverting input connected to receive Vth_OFF_BLK_6,7. The output of OR gate 73 is connected to one input of AND gate 72, and the output of comparator 74 is connected to the other input of AND gate 72. The output of AND gate 68 is connected to the set input of SR flip-flop 70 and the output of AND gate 72 is connected to the reset input of SR flip-flop 70.

AND gate 76 has its inputs connected to the output of SR flip-flop 62 as well as to the SYNCH_EN signal. Signals S5_drv and S8_drv are provided at the output of AND gate 76. AND gate 75 has its inputs connected to the output of SR flip-flop 70, as well as to the SYNCH_EN signal. Signals S6_drv and S7_drv are provided at the output of AND gate 75.

The driving logic unit 21 generates the gate drive signals S1-S8. A sawtooth waveform SAWTOOTH_Fsw is generated through the DAC 51, VCO 52, and sawtooth generator 53 chain provides the timing reference. This sawtooth waveform is compared against various threshold voltages.

For the primary driving side, complementary pairs of drive signals S1_drv/S4_drv and S2_drv/S3_drv are generated through SR flip-flops 55 and 57. These flip-flops 55 and 57 are triggered by comparing the sawtooth waveform SAWTOOTH_Fsw against the threshold voltages Vth_ON_1,4, Vth_ON_2,3, and Vth_ OFF _2,3 using comparators 54, 56, and 58. This provides for proper timing with appropriate dead-time intervals to prevent shoot-through conditions.

For the synchronous rectification (SR) side, the control scheme uses SR flip-flops 62 and 70, which generate the S5_drv/S8_drv and S6_drv/S7_drv signal pairs. The set and reset conditions for these flip-flops incorporate both time-based triggers (through comparisons of SAWTOOTH_Fsw with threshold voltages Vth_ON_5,8, Vth_OFF_5,8, Vth_ON_6,7, and Vth_OFF_6,7) and current/voltage feedback signals (CMP1_OUT and CMP2_OUT). Additional blocking thresholds Vth_OFF_BLK_5,8 and Vth_OFF_BLK_6,7 prevent premature switching. The MODE_SEL signal controls switches SW1 and SW2, which select the appropriate signal CMP1_OUT or CMP2_OUT based on whether the converter is operating in discharge or charge mode respectively, effectively swapping the primary and SR functions between the two sides of the converter. The SYNCH_EN signal can disable the SR outputs through AND gates 75 and 76 during light load conditions, for example, to improve efficiency.

Switches SW1A and SW1B selectively provide either S1_drv or S5_drv as gate drive signal S1, under control of the mode select signal MODE_SEL. Switches SW2A and SW2B selectively provide either S2_drv or S6_drv as gate drive signal S2, under control of the mode select signal MODE_SEL. Switches SW3A and SW3B selectively provide either S3_drv or S7_drv as gate drive signal S3, under control of the mode select signal MODE_SEL. Switches SW4A and SW4B selectively provide either S4_drv or S8_drv as gate drive signal S4, under control of the mode select signal MODE_SEL. Switches SW5A and SW5B selectively provide either S5_drv or S1_drv as gate drive signal S5, under control of the mode select signal MODE_SEL. Switches SW6A and SW6B selectively provide either S6_drv or S2_drv as gate drive signal S6, under control of the mode select signal MODE_SEL. Switches SW7A and SW7B selectively provide either S7_drv or S3_drv as gate drive signal S7, under control of the mode select signal MODE_SEL. Switches SW8A and SW8B selectively provide either S8_drv or S4_drv as gate drive signal S8, under control of the mode select signal MODE_SEL.

When MODE_SEL selects charge mode, drive signals S1_drv through S4_drv are routed to gate drive signals S1 through S4 (primary side), while S5_drv through S8_drv are routed to gate drive signals S5 through S8 (secondary side). Conversely, when MODE_SEL selects discharge mode, the routing is reversed, with S5_drv through S8_drv controlling the primary side transistors and S1_drv through S4_drv controlling the secondary side transistors. This switchable routing architecture enables bidirectional power flow without requiring redesign of the control logic for each direction.

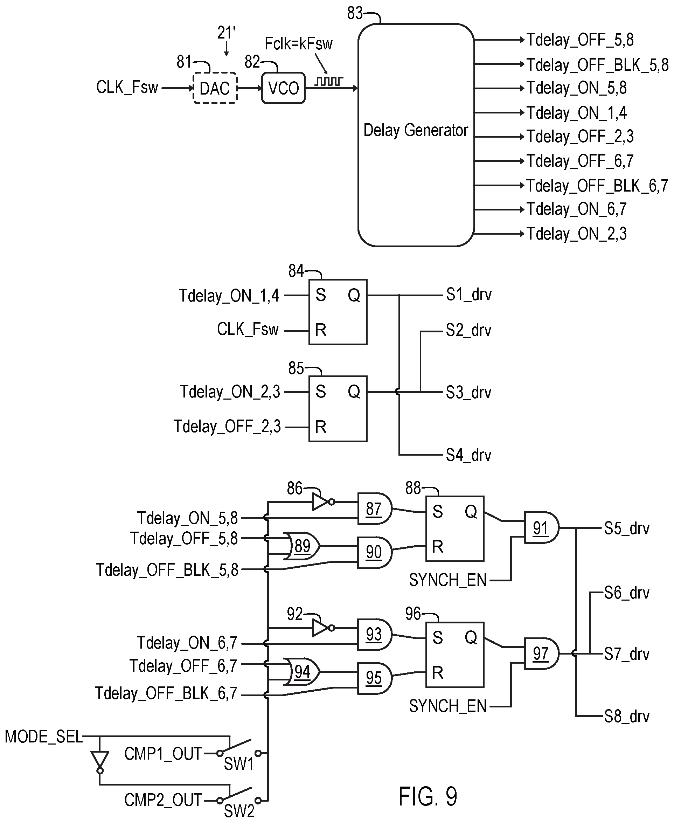

The specifics of a second embodiment of the driving logic unit 21' is now described with reference to FIG. 9. As shown, the driving logic unit 21' includes a DAC 81 receiving CLK_Fsw as input. Output of the DAC 81 is fed to VCO 82, and the output of VCO 82 produces Fclk (proportional to the switching frequency fsw), which is passed to delay generator 83. Note that as an alternative, DAC 81 may not be present, and VCO 82 may receive an appropriate analog input signal used for setting Tsw. Of particular note here is that delay generator 83 generates the signals Tdelay_OFF _5,8, Tdelay_OFF_BLK_5,8, Tdelay_ON_5,8, Tdelay_ON_1,4, Tdelay_OFF_2,3, Tdelay_OFF_6,7, Tdelay_OFF_BLK_6,7, Tdelay_ON_6,7, and Tdelay_ON_2,3.

Tdelay_ON_1,4 is provided to the set input of SR flip-flop 84, and CLK_Fsw is provided to the reset input of SR flip-flop 84. The output of SR flip-flop 84 generates S1_drv and S4_drv. Tdelay_ON_2,3 is provided to the set input of SR flip-flop 85, and Tdelay_OFF_2,3 is provided to the reset input of SR flip-flop 85. The output of SR flip-flop 85 generates S2_drv and S3_drv.

Switches SW1 and SW2 selectively provide CMP1_OUT and CMP2_OUT to the inputs of inverters 86 and 92, as well as to inputs of OR gates 89 and 94. OR gate 89 also receives Tdelay_OFF _5,8 as input, and OR gate 94 also received Tdelay_OFF_6,7 as input. AND gate 87 has inputs connected to receive the output of inverter 86 and Tdelay_ON_5,8. AND gate 90 has inputs connected to receive the output of OR gate 89 as well as Tdelay_OFF_BLK_5,8. SR flip-flop 88 has its set input connected to receive the output of AND gate 87 and its reset input connected to receive the output of AND gate 90. AND gate 93 receives the output of inverter 92 as well as Tdelay_ON_6,7 as input. AND gate 95 receives the output of OR gate 94 as well as Tdelay_OFF_BLK_6,7 as input. SR flip-flop 96 has its set input connected to receive the output of AND gate 93 and its reset input connected to receive the output of AND gate 95. AND gate 91 has its inputs connected to receive the output of SR flip-flop 88 as well as SYNCH_EN, and provides S5_drv and S8_drv at its output. AND gate 97 has its inputs connected to receive the output of SR flip-flop 96 as well as SYNCH_EN, and provides S6_drv and S7_drv at its output.

Here, as with FIG. 8B, when MODE _SEL selects charge mode, drive signals S 1_drv through S4_drv are routed to gate drive signals S1 through S4 (primary side), while S5_drv through S8_drv are routed to gate drive signals S5 through S8 (secondary side). Conversely, when MODE_SEL selects discharge mode, the routing is reversed, with S5_drv through S8_drv controlling the primary side transistors and S1_drv through S4_drv controlling the secondary side transistors. This switchable routing architecture enables bidirectional power flow without requiring redesign of the control logic for each direction.

The isolated CLLC DC-DC converter and driving circuitry described herein offer several advantages over conventional designs. The adaptive control strategy, which adjusts based on the relationship between switching frequency and resonant frequency, ensures effective switching conditions across a wide range of operating scenarios. By implementing ZVS turn-on and ZCS turn-off where possible, the converter achieves high efficiency while minimizing switching losses. The bidirectional capability enabled by the mode-selection feature allows the same hardware to function in both charge and discharge modes without requiring additional components. The selectively enabled synchronous rectification improves efficiency during light load conditions. Additionally, the flexible ground configuration options provide system designers with implementation choices that can be tailored to specific isolation and noise immunity requirements.

Still further, the driving circuitry has the ability to generate all eight gate drive signals (S1-S8) from a single input PWM signal (CLK_Fsw). This architecture drastically reduces the number of control signals required from a microcontroller or other control source, enabling a single controller to efficiently manage multiple converters simultaneously. In large-scale applications such as server power supplies or data centers, this reduction from eight PWM signals to a single PWM signal per converter enables significant scaling, where one microcontroller can potentially drive twelve or more converters with minimal control overhead.

The converter is particularly well-suited for power supply applications in data centers and servers, where high efficiency and power density are desired. In such applications, the ability to manage multiple converters in parallel becomes increasingly important to handle the growing power demands of modern computing infrastructure. The driving logic implementation described hereinabove reduces the number of resources needed to drive multiple bridge circuits while maintaining optimal switching conditions, making it effective for use in high-power server applications. The driving logic implementation described hereinabove reduces the number of resources needed to drive multiple bridge circuits while maintaining optimal switching conditions, making it effective for use in high-power server applications where a single control unit must manage numerous power conversion stages.

Finally, it is evident that modifications and variations can be made to what has been described and illustrated herein without departing from the scope of this disclosure. For example, in an alternative embodiment, the driving circuitry utilizes GaN transistors instead of traditional silicon-based transistors, offering higher efficiency and faster switching speeds. The control logic can be implemented using a digital signal processor (DSP) or a field-programmable gate array (FPGA) to provide more precise control and adaptability.

Although this disclosure has been described with a limited number of embodiments, those skilled in the art, having the benefit of this disclosure, can envision other embodiments that do not deviate from the disclosed scope. Furthermore, skilled persons can envision embodiments that represent various combinations of the embodiments disclosed herein made in various ways.

Example embodiments of the present disclosure are summarized here. Other embodiments can also be understood from the entirety of the specification and the examples.

Example 1: An isolated DC-DC converter, comprising:
- a primary side circuit comprising a first full-bridge arrangement of transistors;
- a secondary side circuit comprising a second full-bridge arrangement of transistors;
- a transformer coupling the primary side circuit to the secondary side circuit; and
- driving circuitry configured to:
   - monitor switching node voltages on both the primary side circuit and the secondary side circuit;
   - selectively operate in a charge mode in which the first full-bridge arrangement of transistors functions as primary driving transistors and the second full-bridge arrangement of transistors functions as synchronous rectification transistors, or in a discharge mode in which the second full-bridge arrangement of transistors functions as primary driving transistors and the first full-bridge arrangement of transistors functions as synchronous rectification transistors;
   - detect zero current crossing points in resonant current waveforms; and
   - adaptively control turn-off timing of the transistors functioning as synchronous rectification transistors based on a relationship between a switching frequency and a resonant frequency of the converter, wherein the driving circuitry turns off the transistors functioning as synchronous rectification transistors based on time delay signals when the switching frequency exceeds the resonant frequency, and based on comparator signals at the zero current crossing points when the switching frequency is less than the resonant frequency.

Example 2: The isolated DC-DC converter of example 1, wherein the driving circuitry comprises:
- a first voltage sensing circuit configured to monitor switching node voltages of the primary side circuit; and
- a second voltage sensing circuit configured to monitor switching node voltages of the secondary side circuit.

Example 3: The isolated DC-DC converter of example 2, wherein: the first voltage sensing circuit comprises a first pair of diodes coupled to switching nodes of the primary side circuit; and the second voltage sensing circuit comprises a second pair of diodes coupled to switching nodes of the secondary side circuit.

Example 4: The isolated DC-DC converter of example 2 or 3, wherein the driving circuitry further comprises: a first comparator configured to compare a rectified voltage from the first voltage sensing circuit against a first threshold voltage; and a second comparator configured to compare a rectified voltage from the second voltage sensing circuit against a second threshold voltage.

Example 5:The isolated DC-DC converter of any of examples 1 to 4, wherein the driving circuitry further comprises a driving logic unit configured to:
- generate a sawtooth waveform synchronized with the switching frequency; and
- compare the sawtooth waveform against multiple threshold voltages to generate timing signals for controlling the first full-bridge arrangement of transistors and the second full-bridge arrangement of transistors.

Example 6: The isolated DC-DC converter of example 5, further comprising threshold generation circuitry configured to generate multiple threshold voltages including:
- turn-on threshold voltages that indicate suitable conditions for turning on transistors of the first and second full-bridge arrangements while achieving zero voltage switching; and
- turn-off threshold voltages that indicate suitable conditions for turning off transistors of the first and second full-bridge arrangements while achieving zero current switching.

Example 7: The isolated DC-DC converter of example 6, wherein the threshold generation circuitry further generates blocking threshold voltages configured to prevent premature turn-off of transistors of the first and second full-bridge arrangements functioning as synchronous rectification transistors.

Example 8: The isolated DC-DC converter of any of examples 1 to 7, wherein the driving circuitry is configured to enable and disable synchronous rectification during light load conditions.

Example 9: The isolated DC-DC converter of any of examples 1 to 8, wherein the primary side circuit is coupled to a bus voltage source and the secondary side circuit is coupled to a battery voltage source.

Example 10: The isolated DC-DC converter of any of examples 1 to 9, wherein:
- in the charge mode, power flows from the primary side circuit to the secondary side circuit; and
- in the discharge mode, power flows from the secondary side circuit to the primary side circuit.

Example 11: The isolated DC-DC converter of any of examples 1 to 10, wherein the driving circuitry comprises:
- a mode selection input configured to select between the charge mode and the discharge mode; and
- switching circuitry configured to route appropriate drive signals to the first and second full-bridge arrangements of transistors based on the selected mode, wherein the drive signals implement the adaptive control of turn-off timing based on the relationship between the switching frequency and the resonant frequency, such that the switching circuitry routes either time delay signals or comparator signals for turn-off control of whichever full-bridge arrangement is functioning as synchronous rectification transistors in the selected mode, and wherein the comparator signals are also used to enable safe turn-on of the synchronous rectification transistors when indicating appropriate zero voltage switching conditions.

Example 12: Driving circuitry for an isolated DC-DC converter having primary and secondary sides each with full-bridge transistor arrangements, the driving circuitry comprising:
- a first voltage sensing circuit comprising:
   - a first diode having its cathode coupled to a first switching node of the primary side;
   - a second diode having its cathode coupled to a second switching node of the primary side;
      wherein anodes of the first and second diodes are connected to a first common node;
   - a first resistor coupled between a supply voltage and the first common node;
   - a first capacitor connected between the first common node and a first ground reference; and
   - a first isolation transformer having its primary side connected between the first common node and the first ground reference;
- a second voltage sensing circuit comprising:
   - a third diode having its cathode coupled to a first switching node of the secondary side;
   - a fourth diode having its cathode coupled to a second switching node of the secondary side;
      wherein anodes of the third and fourth diodes are connected to a second common node;
   - a second resistor coupled between the supply voltage and the second common node;
   - a second capacitor connected between the second common node and a second ground reference; and
   - a second isolation transformer having its primary side connected between the second common node and the second ground reference;
- a first comparator having its non-inverting input coupled to a secondary side of the first isolation transformer, its inverting input connected to receive a first threshold voltage, and its output configured to provide a first comparator output signal;
- a second comparator having its non-inverting input coupled to a secondary side of the second isolation transformer, its inverting input connected to receive a second threshold voltage, and its output configured to provide a second comparator output signal; and
- a driving logic unit configured to generate gate drive signals for the full-bridge transistor arrangements based on the first and second comparator output signals.

Example 13: The driving circuitry of example 12, wherein the driving logic unit comprises:
- a clock signal input;
- a voltage-controlled oscillator (VCO) coupled to the clock signal input through an optional digital-to-analog converter (DAC);
- a sawtooth generator coupled to an output of the VCO;
- a first comparator having its non-inverting input coupled to receive a sawtooth waveform from the sawtooth generator and its inverting input coupled to receive a first turn-on threshold voltage;
- a second comparator having its non-inverting input coupled to receive the sawtooth waveform and its inverting input coupled to receive a first turn-off threshold voltage;
- a third comparator having its non-inverting input coupled to receive the sawtooth waveform and its inverting input coupled to receive a second turn-on threshold voltage.

Example 14: The driving circuitry of example 13, wherein the driving logic unit further comprises:
- a first SR flip-flop having a set input coupled to an output of the first comparator, a reset input coupled to the clock signal input, and an output configured to provide a first primary driving signal;
- a second SR flip-flop having a set input coupled to an output of the third comparator, a reset input coupled to an output of the second comparator, and an output configured to provide a second primary driving signal;
- a first switch having a first input coupled to receive the first comparator output signal from the first comparator, and a control input coupled to receive a mode selection signal;
- a second switch having a first input coupled to receive the second comparator output signal from the second comparator, and a control input coupled to receive the mode selection signal;
- a first inverter having an input coupled to the output of the first switch;
- a fourth comparator having its non-inverting input coupled to receive the sawtooth waveform and its inverting input coupled to receive a first synchronous rectification turn-on threshold voltage;
- a first AND gate having a first input coupled to the output of the fourth comparator and a second input coupled to the output of the first inverter;
- a third SR flip-flop having a set input coupled to the output of the first AND gate;
- a fifth comparator having its non-inverting input coupled to receive the sawtooth waveform and its inverting input coupled to receive a first synchronous rectification turn-off threshold voltage;
- a first OR gate having a first input coupled to the output of the fifth comparator and a second input coupled to the output of the first switch and to the output of the second switch;
- a sixth comparator having its non-inverting input coupled to receive the sawtooth waveform and its inverting input coupled to receive a first blocking threshold voltage;
- a second AND gate having a first input coupled to the output of the first OR gate and a second input coupled to an output of the sixth comparator;
- the third SR flip-flop having a reset input coupled to the output of the second AND gate and an output configured to provide a first synchronous rectification driving signal;
- a second inverter having the input coupled to the output of the second switch and to the output of the first switch;
- a seventh comparator having its non-inverting input coupled to receive the sawtooth waveform and its inverting input coupled to receive a second synchronous rectification turn-on threshold voltage;
- a third AND gate having a first input coupled to the output of the seventh comparator and a second input coupled to the output of the second inverter;
- a fourth SR flip-flop having a set input coupled to the output of the third AND gate;
- an eighth comparator having its non-inverting input coupled to receive the sawtooth waveform and its inverting input coupled to receive a second synchronous rectification turn-off threshold voltage;
- a second OR gate having a first input coupled to the output of the eighth comparator and a second input coupled to the output of the second switch and to the output of the first switch;
- a ninth comparator having its non-inverting input coupled to receive the sawtooth waveform and its inverting input coupled to receive a second blocking threshold voltage;
- a fourth AND gate having a first input coupled to the output of the second OR gate and a second input coupled to the output of the ninth comparator;
- the fourth SR flip-flop having a reset input coupled to the output of the fourth AND gate and an output configured to provide a second synchronous rectification driving signal.

Example 15: The driving circuitry of example 14, further comprising:
- a fifth AND gate having a first input coupled to the output of the third SR flip-flop, a second input coupled to receive a synchronous enable signal, and an output configured to provide the first synchronous rectification driving signal; and
- a sixth AND gate having a first input coupled to the output of the fourth SR flip-flop, a second input coupled to receive the synchronous enable signal, and an output configured to provide the second synchronous rectification driving signal.

Example 16: The driving circuitry of example 14 or 15, further comprising:
- output switching circuitry comprising:
   - a first set of switches configured to selectively route, based on the mode selection signal, either the first primary driving signal and the second primary driving signal or the first synchronous rectification driving signal and the second synchronous rectification driving signal to drive inputs of the full-bridge transistor arrangement on the primary side; and
   - a second set of switches configured to selectively route, based on the mode selection signal, either the first synchronous rectification driving signal and the second synchronous rectification driving signal or the first primary driving signal and the second primary driving signal to drive inputs of the full-bridge transistor arrangement on the secondary side.

Example 17: The driving circuitry of any of examples 12 to 16, wherein the driving logic unit comprises:
- a delay generator configured to receive a signal proportional to the clock signal and generate multiple delay signals, the delay signals including:
   - a first primary turn-on delay signal;
   - a second primary turn-on delay signal;
   - a second primary turn-off delay signal;
   - a first synchronous rectification turn-on delay signal;
   - a first synchronous rectification turn-off delay signal;
   - a first blocking delay signal; a second synchronous rectification turn-on delay signal;
   - a second synchronous rectification turn-off delay signal; and
   - a second blocking delay signal.

Example 18: The driving circuitry of any of examples 12 to 17, further comprising:
- a first SR flip-flop having a set input coupled to receive the first primary turn-on delay signal, a reset input coupled to receive the clock signal, and an output configured to provide a first primary driving signal;
- a second SR flip-flop having a set input coupled to receive the second primary turn-on delay signal, a reset input coupled to receive the second primary turn-off delay signal, and an output configured to provide a second primary driving signal;
- a first inverter having the input coupled to the first or second comparator output signal of the first or second sensing circuit via switching circuitry;
- a first AND gate having inputs coupled to receive the output of the first inverter and the first synchronous rectification turn-on delay signal;
- a first OR gate having inputs coupled to receive the first synchronous rectification turn-off delay signal and the first or second comparator output signal of the first or second sensing circuit via switching circuitry;
- a second AND gate having inputs coupled to receive the output of the first OR gate and the first blocking delay signal;
- a third SR flip-flop having a set input coupled to the output of the first AND gate, a reset input coupled to an output of the second AND gate, and an output providing a first synchronous rectification signal;
- a second inverter having the input coupled to the first or second comparator output signal of the first or second sensing circuit via switching circuitry;
- a third AND gate having inputs coupled to receive the output of the second inverter and the second synchronous rectification turn-on delay signal;
   a second OR gate having inputs coupled to receive the second synchronous rectification turn-off delay signal and the first or second comparator output signal of the first or second sensing circuit via switching circuitry;
- a fourth AND gate having inputs coupled to receive the output of the second OR gate and the second blocking delay signal; and
- a fourth SR flip-flop having a set input coupled to the output of the third AND gate, a reset input coupled to the output of the fourth AND gate, and an output providing a second synchronous rectification signal.

Example 19: The driving circuitry of any of examples 12 to 18, wherein:
- the first ground reference is connected to a control system ground associated with the driving logic unit; and
- the second ground reference is electrically isolated from the first ground reference by the second isolation transformer.

Example 20: The driving circuitry of any of examples 12 to 18, wherein:
- the first ground reference is connected to a control system ground associated with the driving logic unit; and

- the second ground reference is electrically isolated from the first ground reference by at least one of the first and second isolation transformers and by the main isolation transformer of the DC-DC converter, wherein the connection configuration of the ground references of the isolation transformers is adaptable.

## Claims

1. An isolated DC-DC converter, comprising:
- a primary side circuit comprising a first full-bridge arrangement of transistors;
- a secondary side circuit comprising a second full-bridge arrangement of transistors;
- a transformer coupling the primary side circuit to the secondary side circuit; and
- driving circuitry configured to:
- monitor switching node voltages on both the primary side circuit and the secondary side circuit;
- selectively operate in a charge mode in which the first full-bridge arrangement of transistors functions as primary driving transistors and the second full-bridge arrangement of transistors functions as synchronous rectification transistors, or in a discharge mode in which the second full-bridge arrangement of transistors functions as primary driving transistors and the first full-bridge arrangement of transistors functions as synchronous rectification transistors;
- detect zero current crossing points in resonant current waveforms; and
- adaptively control turn-off timing of the transistors functioning as synchronous rectification transistors based on a relationship between a switching frequency and a resonant frequency of the converter, wherein the driving circuitry turns off the transistors functioning as synchronous rectification transistors based on time delay signals when the switching frequency exceeds the resonant frequency, and based on comparator signals at the zero current crossing points when the switching frequency is less than the resonant frequency.

2. The isolated DC-DC converter of claim 1, wherein the driving circuitry comprises:
- a first voltage sensing circuit configured to monitor switching node voltages of the primary side circuit; and
- a second voltage sensing circuit configured to monitor switching node voltages of the secondary side circuit,
for example wherein: the first voltage sensing circuit comprises a first pair of diodes coupled to switching nodes of the primary side circuit; and the second voltage sensing circuit comprises a second pair of diodes coupled to switching nodes of the secondary side circuit,
and/or
for example wherein the driving circuitry further comprises: a first comparator configured to compare a rectified voltage from the first voltage sensing circuit against a first threshold voltage; and a second comparator configured to compare a rectified voltage from the second voltage sensing circuit against a second threshold voltage.

3. The isolated DC-DC converter of claim 1 or 2, wherein the driving circuitry further comprises a driving logic unit configured to:
- generate a sawtooth waveform synchronized with the switching frequency; and
- compare the sawtooth waveform against multiple threshold voltages to generate timing signals for controlling the first full-bridge arrangement of transistors and the second full-bridge arrangement of transistors,
for example the driving circuitry further comprising threshold generation circuitry configured to generate multiple threshold voltages including:
- turn-on threshold voltages that indicate suitable conditions for turning on transistors of the first and second full-bridge arrangements while achieving zero voltage switching; and
- turn-off threshold voltages that indicate suitable conditions for turning off transistors of the first and second full-bridge arrangements while achieving zero current switching,
for example wherein the threshold generation circuitry further generates blocking threshold voltages configured to prevent premature turn-off of transistors of the first and second full-bridge arrangements functioning as synchronous rectification transistors.

4. The isolated DC-DC converter of any of claims 1 to 3, wherein the driving circuitry is configured to enable and disable synchronous rectification during light load conditions.

5. The isolated DC-DC converter of any of claims 1 to 4, wherein the primary side circuit is coupled to a bus voltage source and the secondary side circuit is coupled to a battery voltage source,
and/or
wherein:
- in the charge mode, power flows from the primary side circuit to the secondary side circuit; and
- in the discharge mode, power flows from the secondary side circuit to the primary side circuit.

6. The isolated DC-DC converter of any of claims 1 to 5, wherein the driving circuitry comprises:
- a mode selection input configured to select between the charge mode and the discharge mode; and
- switching circuitry configured to route appropriate drive signals to the first and second full-bridge arrangements of transistors based on the selected mode, wherein the drive signals implement the adaptive control of turn-off timing based on the relationship between the switching frequency and the resonant frequency, such that the switching circuitry routes either time delay signals or comparator signals for turn-off control of whichever full-bridge arrangement is functioning as synchronous rectification transistors in the selected mode, and wherein the comparator signals are also used to enable safe turn-on of the synchronous rectification transistors when indicating appropriate zero voltage switching conditions.

7. Driving circuitry for an isolated DC-DC converter having primary and secondary sides each with full-bridge transistor arrangements, the driving circuitry comprising:
- a first voltage sensing circuit comprising:
- a first diode having its cathode coupled to a first switching node of the primary side;
- a second diode having its cathode coupled to a second switching node of the primary side;
wherein anodes of the first and second diodes are connected to a first common node;
- a first resistor coupled between a supply voltage and the first common node;
- a first capacitor connected between the first common node and a first ground reference; and
- a first isolation transformer having its primary side connected between the first common node and the first ground reference;
- a second voltage sensing circuit comprising:
- a third diode having its cathode coupled to a first switching node of the secondary side;
- a fourth diode having its cathode coupled to a second switching node of the secondary side;
wherein anodes of the third and fourth diodes are connected to a second common node;
- a second resistor coupled between the supply voltage and the second common node;
- a second capacitor connected between the second common node and a second ground reference; and
- a second isolation transformer having its primary side connected between the second common node and the second ground reference;
- a first comparator having its non-inverting input coupled to a secondary side of the first isolation transformer, its inverting input connected to receive a first threshold voltage, and its output configured to provide a first comparator output signal;
- a second comparator having its non-inverting input coupled to a secondary side of the second isolation transformer, its inverting input connected to receive a second threshold voltage, and its output configured to provide a second comparator output signal; and
- a driving logic unit configured to generate gate drive signals for the full-bridge transistor arrangements based on the first and second comparator output signals.

8. The driving circuitry of claim 7, wherein the driving logic unit comprises:
- a clock signal input;
- a voltage-controlled oscillator (VCO) coupled to the clock signal input through an optional digital-to-analog converter (DAC);
- a sawtooth generator coupled to an output of the VCO;
- a first comparator having its non-inverting input coupled to receive a sawtooth waveform from the sawtooth generator and its inverting input coupled to receive a first turn-on threshold voltage;
- a second comparator having its non-inverting input coupled to receive the sawtooth waveform and its inverting input coupled to receive a first turn-off threshold voltage;
- a third comparator having its non-inverting input coupled to receive the sawtooth waveform and its inverting input coupled to receive a second turn-on threshold voltage.

9. The driving circuitry of claim 8, wherein the driving logic unit further comprises:
- a first SR flip-flop having a set input coupled to an output of the first comparator, a reset input coupled to the clock signal input, and an output configured to provide a first primary driving signal;
- a second SR flip-flop having a set input coupled to an output of the third comparator, a reset input coupled to an output of the second comparator, and an output configured to provide a second primary driving signal;
- a first switch having a first input coupled to receive the first comparator output signal from the first comparator, and a control input coupled to receive a mode selection signal;
- a second switch having a first input coupled to receive the second comparator output signal from the second comparator, and a control input coupled to receive the mode selection signal;
- a first inverter having an input coupled to the output of the first switch;
- a fourth comparator having its non-inverting input coupled to receive the sawtooth waveform and its inverting input coupled to receive a first synchronous rectification turn-on threshold voltage;
- a first AND gate having a first input coupled to the output of the fourth comparator and a second input coupled to the output of the first inverter;
- a third SR flip-flop having a set input coupled to the output of the first AND gate;
- a fifth comparator having its non-inverting input coupled to receive the sawtooth waveform and its inverting input coupled to receive a first synchronous rectification turn-off threshold voltage;
- a first OR gate having a first input coupled to the output of the fifth comparator and a second input coupled to the output of the first switch and to the output of the second switch;
- a sixth comparator having its non-inverting input coupled to receive the sawtooth waveform and its inverting input coupled to receive a first blocking threshold voltage;
- a second AND gate having a first input coupled to the output of the first OR gate and a second input coupled to an output of the sixth comparator;
- the third SR flip-flop having a reset input coupled to the output of the second AND gate and an output configured to provide a first synchronous rectification driving signal;
- a second inverter having the input coupled to the output of the second switch and to the output of the first switch;
- a seventh comparator having its non-inverting input coupled to receive the sawtooth waveform and its inverting input coupled to receive a second synchronous rectification turn-on threshold voltage;
- a third AND gate having a first input coupled to the output of the seventh comparator and a second input coupled to the output of the second inverter;
- a fourth SR flip-flop having a set input coupled to the output of the third AND gate;
- an eighth comparator having its non-inverting input coupled to receive the sawtooth waveform and its inverting input coupled to receive a second synchronous rectification turn-off threshold voltage;
- a second OR gate having a first input coupled to the output of the eighth comparator and a second input coupled to the output of the second switch and to the output of the first switch;
- a ninth comparator having its non-inverting input coupled to receive the sawtooth waveform and its inverting input coupled to receive a second blocking threshold voltage;
- a fourth AND gate having a first input coupled to the output of the second OR gate and a second input coupled to the output of the ninth comparator;
- the fourth SR flip-flop having a reset input coupled to the output of the fourth AND gate and an output configured to provide a second synchronous rectification driving signal, for example the driving circuitry further comprising:
- a fifth AND gate having a first input coupled to the output of the third SR flip-flop, a second input coupled to receive a synchronous enable signal, and an output configured to provide the first synchronous rectification driving signal; and
- a sixth AND gate having a first input coupled to the output of the fourth SR flip-flop, a second input coupled to receive the synchronous enable signal, and an output configured to provide the second synchronous rectification driving signal,
and/or
for example the driving circuitry further comprising:
- output switching circuitry comprising:
- a first set of switches configured to selectively route, based on the mode selection signal, either the first primary driving signal and the second primary driving signal or the first synchronous rectification driving signal and the second synchronous rectification driving signal to drive inputs of the full-bridge transistor arrangement on the primary side; and
- a second set of switches configured to selectively route, based on the mode selection signal, either the first synchronous rectification driving signal and the second synchronous rectification driving signal or the first primary driving signal and the second primary driving signal to drive inputs of the full-bridge transistor arrangement on the secondary side.

10. The driving circuitry of any of claims 7 to 9, wherein the driving logic unit comprises:
- a delay generator configured to receive a signal proportional to the clock signal and generate multiple delay signals, the delay signals including:
- a first primary turn-on delay signal;
- a second primary turn-on delay signal;
- a second primary turn-off delay signal;
- a first synchronous rectification turn-on delay signal;
- a first synchronous rectification turn-off delay signal;
- a first blocking delay signal; a second synchronous rectification turn-on delay signal;
- a second synchronous rectification turn-off delay signal; and
- a second blocking delay signal.

11. The driving circuitry of any of claims 7 to 10, further comprising:
- a first SR flip-flop having a set input coupled to receive the first primary turn-on delay signal, a reset input coupled to receive the clock signal, and an output configured to provide a first primary driving signal;
- a second SR flip-flop having a set input coupled to receive the second primary turn-on delay signal, a reset input coupled to receive the second primary turn-off delay signal, and an output configured to provide a second primary driving signal;
- a first inverter having the input coupled to the first or second comparator output signal of the first or second sensing circuit via switching circuitry;
- a first AND gate having inputs coupled to receive the output of the first inverter and the first synchronous rectification turn-on delay signal;
- a first OR gate having inputs coupled to receive the first synchronous rectification turn-off delay signal and the first or second comparator output signal of the first or second sensing circuit via switching circuitry;
- a second AND gate having inputs coupled to receive the output of the first OR gate and the first blocking delay signal;
- a third SR flip-flop having a set input coupled to the output of the first AND gate, a reset input coupled to an output of the second AND gate, and an output providing a first synchronous rectification signal;
- a second inverter having the input coupled to the first or second comparator output signal of the first or second sensing circuit via switching circuitry;
- a third AND gate having inputs coupled to receive the output of the second inverter and the second synchronous rectification turn-on delay signal;
a second OR gate having inputs coupled to receive the second synchronous rectification turn-off delay signal and the first or second comparator output signal of the first or second sensing circuit via switching circuitry;
- a fourth AND gate having inputs coupled to receive the output of the second OR gate and the second blocking delay signal; and
- a fourth SR flip-flop having a set input coupled to the output of the third AND gate, a reset input coupled to the output of the fourth AND gate, and an output providing a second synchronous rectification signal.

12. The driving circuitry of any of claims 7 to 11, wherein:
- the first ground reference is connected to a control system ground associated with the driving logic unit; and
- the second ground reference is electrically isolated from the first ground reference by the second isolation transformer.

13. The driving circuitry of any of claims 7 to 11, wherein:
- the first ground reference is connected to a control system ground associated with the driving logic unit; and
- the second ground reference is electrically isolated from the first ground reference by at least one of the first and second isolation transformers and by the main isolation transformer of the DC-DC converter, wherein the connection configuration of the ground references of the isolation transformers is adaptable.
